# EUROPEAN PATENT APPLICATION

(11) **EP 2 698 713 A2**
(43) Date of publication of application: **19.02.2014**
(21) Application number: 13178440.7
(22) Date of filing: 30.07.2013
(51) Int. Cl.: G06F 9/50

(54) **Load balancing in data processing system**

(30) Priority: 08.08.2012 GB 201214183; 08.08.2012 GB 201309546; 05.06.2013 US 201313910819
(71) Applicant: Basis Technologies International Limited, London W1K 5DB (GB)
(72) Inventor: Oliver, Craig, London, W1K 5DB (GB)
(74) Representative: Blake, Stephen James

(57) **Abstract**

A method of load balancing is provided in a data processing system where a central processor within the data processing system monitors the total number of processors within the system and the total number of available processors within the system. From these numbers the central processor can allocate processors to fulfil a request for data processing from an endpoint connected to the data processing system and reallocate processors in response to a new request for resources, or an alteration in the total number of processors.

## Description

### Field of the Invention

The present invention relates to load balancing within data processing system. It is particularly applicable to use in an SAP (RTM) system.

### Background of the Invention

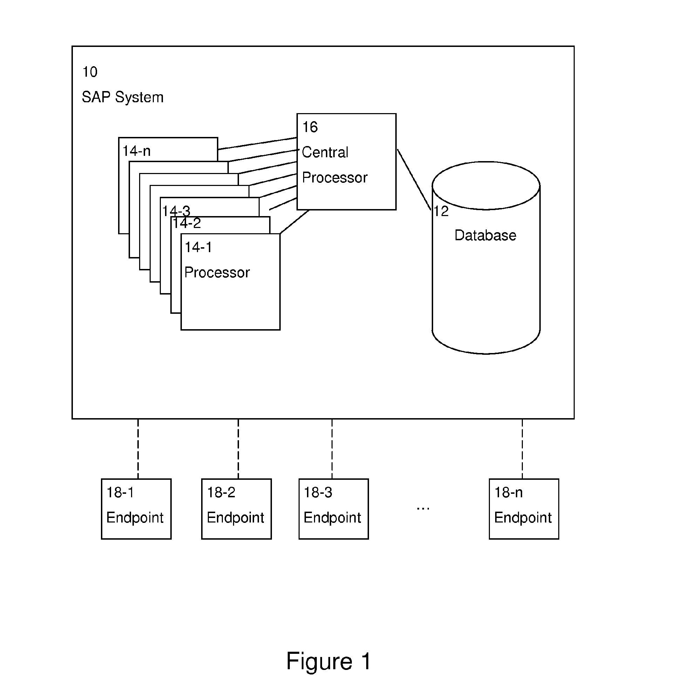

SAP (System Analysis and Program Development) (RTM) is a data processing system which is designed to enable businesses to manage their data. Figure 1 illustrates an example architecture of an SAP (RTM) system 10 which includes a single SAP (RTM) database 12, one or more application servers 14-1 to 14-n and a control server 16.

The SAP (RTM) database 12 stores all the data and the code for applications to process the data stored in that database 12. Application processors 14-1... 14-n are designed to access the data and execute the application code present in the SAP database 12 in response to requests received by the SAP (RTM) system 10 from user endpoints 18-1 to 18-n which are connected to the SAP (RTM) system through any suitable mechanism. For example, the user endpoints may be connected directly to the SAP (RTM) system as illustrated in Figure 1 or may be connected through any suitable access network. Preferably, where there is more than one processor a central processor is provided to co-ordinate the actions of the various application processors.

In an SAP (RTM) system having more than one application processor it is advantageous to spread the processing load between the available application processor. Conventionally, in order to achieve load balancing the control server upon receiving a request for data processing from an endpoint determines the application processor with the least load on it and allocates that processor to perform the required data processing.

However, by load balancing in this way there is no flexibility as, once a processor has been allocated, no changes can be made. This means that, for example, if an urgent request for data processing is received by the system there is no way to use any application processors which are already performing data processing.

### Summary of the Invention

In accordance with a first aspect of the present invention there is provided a method of load balancing in a data processing system comprising a memory including data, a central processor and a plurality of data processors comprising: initiating a program instance to process all or part of the data stored in the memory, partitioning the all or part of the data to be processed into a plurality of data intervals, selecting a set of data processors to process the data intervals, allocating each of the set of data processors one of the plurality of intervals to process, each data processor processing the allocated data interval to produce a result, storing each result as an output and allocating a next unprocessed data interval to the next available one of the set of processors wherein the number of data processors forming the set of data processors is dynamically adjusted throughout processing the data according to the load on the system. By storing the output of the data processors as they process each interval of data the central processor can load balance not only when receiving a request for data to be processed but can alter the load distribution in response to any further requests or changes in the availability of one or more of the data processors.

The central processor may be able to analyse the load on the system and if the load is greater than a threshold decrease the number of processors in the set of processors. In this way the central processor can ensure that an excessive load is not placed on the system.

The central processor may monitor the total number of processors in the data processing system and allocate a subset of the plurality of processors in order to achieve a predetermined load on the system. The central processor may also, upon detecting a change in the number of data processors in the SAP system, alter the number of data processors in the set of data processors in order that the proportion remains constant.

Optionally, the central processor may detect a change in the total number of processors in the data processing system and alter the number of processors allocated to the set of data processors, for example by decreasing or increasing the number of processors in the set of data processors in response to a decrease or increase respectively in the total number of processors in the data processing system.

The central processor may be configured to receive a user input sent to the data processing system, the user input comprising a request to initiate a program instance, the central processor determining from the request the number of data processors to be allocated to the set of data processors. This allows the central processor to react to user expectations. For example, the central processor can then allocate more data processors to servicing an urgent request than servicing a low priority request.

The request may specify the proportion of the total number of data processors to form the set of data processors.

In accordance with a second aspect of the present invention there is provided a data processing system comprising a memory, a central processor and a plurality of data processors wherein, each data processor is configured to, upon receiving an interval of data, process the interval of data and output a result, the memory being configured to store results, the central processor being configured to, upon initiation of a program instance, process all or part of the data stored in the memory, select a set of data processors process the data intervals for the program instance, wherein each of the set of data processors is allocated an interval of data in the database and a next unprocessed data interval is allocated to the next available one of the set of processors wherein the number of data processors forming the set of data processors is dynamically adjusted throughout processing the data according to the load on the system..

The central processor may be configured to analyse the load on the data processing system and if the load is greater than a threshold decrease the number of processors allocated to the set of processors.

The central processor may monitor the total number of processors in the data processing system and allocate a subset of the plurality of processors in order to achieve a predetermined load on the system.

Optionally, the central processor may be configured to detect a change in the total number of processors in the data processing system and alter the number of processors allocated to the set of data processors, for example by decreasing or increasing the number of processors in the set of data processors in response to a decrease or increase respectively in the total number of processors in the data processing system.

The central processor may be configured to receive a user input received by the data processing system, the user input comprising a request to initiate a program instance, the central processor determining from the request the number of data processors to be allocated to the set of data processors. The request may, for example, specify the proportion of the total number of data processors to form the set of data processors.

In accordance with a third aspect of the present invention there is provided a central processor in an data processing system, the data processing system comprising a memory including data and a plurality of data processors, the central processor configured to initiate a program instance to process all or part of the data stored in the memory, select a set of data processors in the data processing system to fulfil process the data intervals for the program instance wherein the number of data processors forming the set of data processors is dynamically adjusted throughout processing the data according to the load on the system.

In accordance with a fourth aspect of the present invention there is provided a computer program for instructing a processor in a data processing system to perform the method of the first aspect of the invention.

### Brief Description of the Drawings

Figure 1 illustrates an SAP (RTM) implementation of a data processing system on which the invention is executed;
Figure 2 is a flow diagram for a method of load balancing

### Detailed description

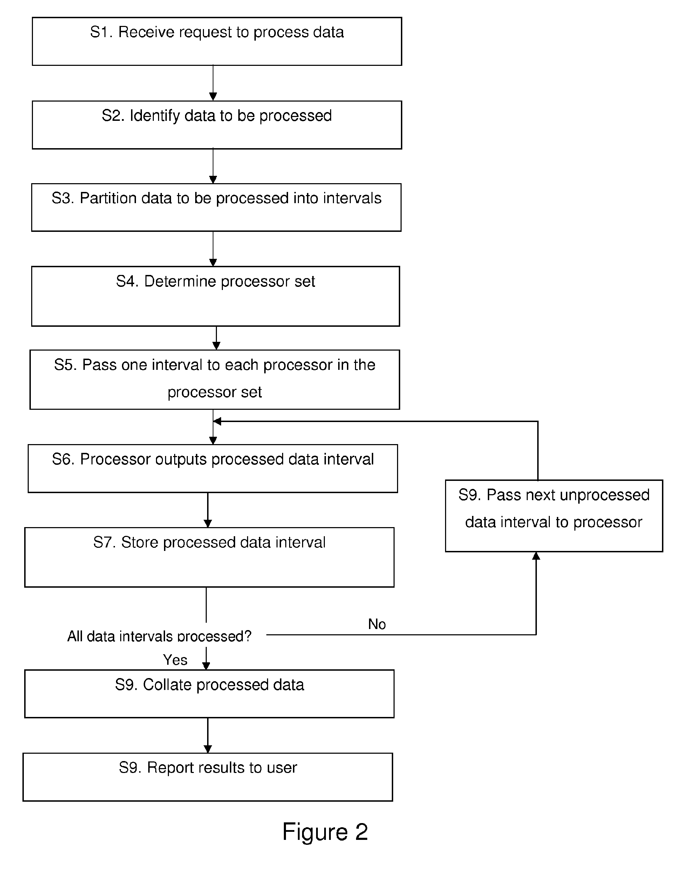

A method of data processing in an SAP (RTM) system will now be described with reference to Figure 2. The SAP (RTM) system 10 has the same architecture as that described with reference to Figure 1. Namely, it comprises a database 12, a number of processors 14-1 to 14-n and a central processor 16.

Referring to Figure 2 there is illustrated a process which is executed in the SAP (RTM) system to enable load balancing between the data processors.

In step S1 the system receives a request to process data in the database from a terminal 18 connected to the system 10. The request may be, for example, a request to query the database for data matching a set of parameters. The central processor identifies the data to be processed (S2) and causes the data to be divided up into intervals (S3). The intervals may be of any suitable size, for example, they may comprise 100 rows of data in the database. Preferably, however, the intervals are all of equal size.

Once the data has been divided into intervals in S3 the central processor determines a set of data processors to be used to process the data in response to the request (S4). Having determined the processor set and divided the data the control framework causes each data processor to be provided with a data interval in order that all of the processors in the set are provided with a different one of the plurality of intervals to process.

The central processor may use any suitable algorithm to determine the number of data processors to be used to process the data. For example, the central processor may allocate a predetermined number of data processors to each program instance or may divide up the total number of data processors between the number of program instances running in the system (so, if there are three requests being serviced there are three sets of data processors all of equal size).

Each processor processes the data in the interval to produce a result and passes the result of the processing to a memory where it is then saved. Preferably, the results are saved in an optimised format, for example it may be saved with an identifier so the results can be readily collated. The data may be stored in a database or any other suitable format. Optionally, a separate database may be set up for the results of each program instance rather than the results of every program instance being stored in a single database in the memory.

The control framework, upon determining that a processor has completed processing one interval will determine whether there are any data intervals which have not been processed. If there are unprocessed data intervals the central processor passes the next unprocessed data interval to the processor for processing. This is repeated for all the processors in the processor set until all the data is processed.

Once all the intervals have been processed i.e. all of the data has been searched for the parameters, the control framework causes the results to be collated and the collated results may be saved and/or output to a user endpoint or other program instance. Optionally, it is the data processor which determines that it is processing the final data interval and therefore collates the results and saves and/or outputs the collated results.

Saving the processed data output by the processors during the data processing stage enables processing of the data to be paused at any time as the control framework can opt not to send any further intervals to the data processors. This may be desirable, for example, if the processors being used to process the data are required to process data in response to another user request.

Additionally, because the processed data from each of the processors is stored once it is produced it is also possible to collate an incomplete set of results where only part of the data set has been analyzed.

Optionally, the system may be set up so that the load on the system is dependent on the load on the system as an entirety. For example, the central processor may be set up to ensure that the load on the data processors in the SAP system is at or below 70%. The central processor, upon receiving a new request for data processing may determine that the set of data processors to service the request must be at or below a certain number to keep the load on the SAP system at or below 70%. Alternatively, if the load is at 70% the central processor may reallocate data processors which have a data processing task to service a new request. If a data processor is reallocated then it proceeds to fulfil the new request when it finishes processing a data interval.

Optionally, the request may include an indicator of priority. The central processor may use the indicator to determine the number of processors allocated to service the request. For example an indicator having an important priority will have a greater number of processors allocated to it than a request with a normal priority.

In another example the central processor may determine that the total number of data processors in the SAP (RTM) system has increased, for example due to a new processor being added to the system. In such an instance the central processor may increase the number of processors in one or more sets of data processors whilst keeping within the load limits in order to speed up the fulfilment of requests. Conversely, if one or more of the data processors in the SAP (RTM) system are decommissioned or unavailable the control processor may detect this and alter the total number of processors in the system and decrease the number of data processors in one or more sets of data processors accordingly. It is also possible for a percentage processor capacity to be set at a percentage of the total processing capacity of the system and the number of processors allocated to each process to be altered in response to altered demands on the system in order to enable the load on the system to be kept constant.

As will be understood by the skilled person a user may access the system using any suitable terminal.

Additionally, rather than being initiated by a manual request from a user endpoint the processing of data may be initiated by any suitable process including, but not limited to, automated running at a predetermined time or after a predetermined time period.

The SAP (RTM) system may be implemented on processors which are collocated. Alternatively one or more of the processors may be distributed geographically at separate locations. It will be understood that the data processors may be physical processors or virtual processors.

The control framework within an SAP (RTM) system may be considered to be logic which runs on one or more application servers and acts to control processes with the SAP (RTM) system. In particular, it may control the distribution of data across the configured intervals & the allocation out to the available processors.

## Claims

1. A method of load balancing in a data processing system comprising a memory including data, a central processor and a plurality of data processors comprising:
initiating a program instance to process all or part of the data stored in the memory;
partitioning the all or part of the data to be processed into a plurality of data intervals;
selecting a set of data processors to process the data intervals;
allocating each of the set of data processors one of the plurality of intervals to process;
each data processor processing the allocated data interval to produce a result;
storing each result as an output; and
allocating a next unprocessed data interval to the next available one of the set of processors wherein the number of data processors forming the set of data processors is dynamically adjusted throughout processing the data according to the load on the system.

2. A method of load balancing in a data processing system as claimed in claim 1, wherein the central processor analyses the load on the system and if the load is greater than a threshold decreases the number of processors in the set of processors or the central processor monitors the total number of processors in the data processing system and allocates a subset of the plurality of processors in order to achieve a predetermined load on the system.

3. A method of load balancing in a data processing system as claimed in claim 1, wherein the central processor detects a change in the total number of processors in the data processing system and alters the number of processors allocated to the set of data processors.

4. A method of load balancing in a data processing system as claimed in claim 3, wherein the central processor detects a decrease in the total number of processors in the data processing system, and decreases the number of processors allocated to the set of data processors and/or wherein the central processor detects an increase in the total number of processors in the data processing system, and increases the number of processors in the set of data processors.

5. A method of load balancing in a data processing system as claimed in any one of the preceding claims, wherein the central processor is configured to receive a user input, the user input comprising a request to initiate a program instance, the central processor determining from the request the number of data processors to be allocated to the set of data processors.

6. A method of load balancing in a data processing system as claimed in claim 5, wherein the request specifies the proportion of the total number of data processors to form the set of data processors.

7. A method of load balancing in a data processing system as claimed in claim 6, wherein the central processor, upon detecting a change in the number of data processors in the SAP system alters the number of data processors in the set of data processors in order that the proportion remains constant.

8. A data processing system comprising a memory, a central processor and a plurality of data processors wherein,
each data processor is configured to, upon receiving an interval of data, process the interval of data and output a result;
the memory being configured to store results;
the central processor being configured to, upon initiation of a program instance, process all or part of the data stored in the memory, select a set of data processors process the data intervals for the program instance, wherein
each of the set of data processors is allocated an interval of data in the database and a next unprocessed data interval is allocated to the next available one of the set of processors wherein the number of data processors forming the set of data processors is dynamically adjusted throughout processing the data according to the load on the system.

9. A data processing system as claimed in claim 8, wherein the central processor analyses the load on the data processing system and if the load is greater than a threshold decreases the number of processors allocated to the set of processors or the central processor monitors the total number of processors in the data processing system and allocates a subset of the plurality of processors in order to achieve a predetermined load on the system.

10. A data processing system as claimed in claim 8, wherein the central processor detects a change in the total number of processors in the data processing system and alters the number of processors allocated to the set of data processors

11. A data processing system as claimed in claim 10, wherein the central processor detects a decrease in the total number of processors in the data processing system, and decreases the number of processors allocated to the set of data processors and/or detects an increase in the total number of processors in the data processing system, and increases the number of processors allocated to the set of data processors.

12. A data processing system as claimed in any one of the claims 8 to 11, wherein the central processor is configured to receive a user input, the user input comprising a request to initiate a program instance, the central processor determining from the request the number of data processors to be allocated to the set of data processors.

13. A data processing system as claimed in claim 12 wherein the request specifies the proportion of the total number of data processors to form the set of data processors.

14. A data processing system as claimed in claim 13 wherein the central processor, upon detecting a change in the number of data processors in the data processing system alters the number of data processors in the set of data processors in order that the proportion remains constant.

15. A central processor in an data processing system, the data processing system comprising a memory including data and a plurality of data processors, the central processor configured to initiate a program instance to process all or part of the data stored in the memory, select a set of data processors in the data processing system to fulfil process the data intervals for the program instance wherein the number of data processors forming the set of data processors is dynamically adjusted throughout processing the data according to the load on the system.
